# EUROPEAN PATENT SPECIFICATION

(11) **EP 0 325 699 B1**
(45) Date of publication and mention of the grant of the patent: **05.01.1994**
(21) Application number: 88116625.0
(22) Date of filing: 07.10.1988
(51) Int. Cl.: H02G 15/06

(54) **Electrical cable termination-connector for electrically connecting one-core cables to an equipment terminal**
Elektrischer Kabelendverbinder zum elektrischen Verbinden von einadrigen Kabeln mit einem Anschluss einer Installation
Connecteur d'extrémité de câble électrique pour connexion électrique de câbles à une âme à une borne d'une installation

(30) Priority: 28.01.1988 DE 3802435
(43) Date of publication of application: 02.08.1989
(73) Proprietor: MINNESOTA MINING AND MANUFACTURING COMPANY, St. Paul, Minnesota 55133-3427 (US)
(72) Inventor: Bock, Manfred, D-2000 Hamburg 73 (DE); Bollweg, Hans, D-2000 Hamburg 90 (DE); Krabs, Raymund, D-2100 Hamburg 90 (DE)
(74) Representative: Patentanwälte Hauck, Graalfs, Wehnert, Döring, Siemons

(56) References cited:
- EP-A- 0 087 267
- DE-A- 3 233 572
- DE-A- 3 248 212
- DE-A- 3 438 299
- FR-A- 2 201 564

## Description

The invention refers to an electrical cable termination-connector for electrically connecting one-core cables to an equipment terminal according to the preamble of patent claim 1.

Particularly in connection with electrical switching implements or the like it is frequently required to connect one-pole equipment terminals with at least one one-core cable such that the connection is effectively insulated and sufficiently protected against the penetration of moisture. The equipment terminal normally includes an insulator body, e.g. as a part of a feed-through means in a wall, which provides an annular sealing surface, e.g. in the form of an outer cone.

A T-shaped insulating closure cap for an electrical cable termination connector is known from the German patent specification No. 32 48 212, wherein the cable end including the connection lug is introduced through the stem of the insulator closure cap while an inner cone of the transverse arm cooperates with an outer cone of an insulator body. The known cable termination connector, however, is not suitable for the parallel connection of two or more cables.

In the German patent specification No. 32 33 572 an electrical cable termination-connector is disclosed which also provides a T-shaped insulating body, the cable end including the connection lug being introduced through the stem thereof. One end of the transverse arm is formed with an outer cone and the opposite end is formed with an inner cone. The inner cone cooperates with an outer cone of the insulating body of the equipment terminal. The transverse arm is hollow and receives the threaded connection means for the connection lug. In case of a single cable core connection a closure cap having an inner cone is plugged on the outer cone on the opposite end of the transverse arm. In case of a parallel connection of cables, a second T-shaped insulating body is used, the inner cone at one end of the transverse arm sealingly cooperating with the outer cone of the transverse arm of the first T-shaped body. In this known embodiment the T-shaped body defines a kind of modulus such that one T-shaped body is used for each cable connection. The known electrial cable termination connector, however, is expensive to manufacture. The sealing of the T-shaped insulating body against the equipment insulator body or against a second T-shaped insulating body, respectivly, is achieved by the conical engagement of the parts, as described; thus, the conical surfaces must be precisely formed in order to achieve the desired sealing effect preventing the penetration of moisture. Further, the T-shaped insulating body is relatively solid, and thus consumes a corresponding amount of material.

In "Electrical Review" Vol. 215, No. 9, October 5, 1984, page 23 a cable termination-connector is disclosed similar to that described above, wherein for each cable core terminal a T-shaped body of insulating material is provided, the transverse arm thereof including a double conical throughbore, the conical bore portions enlarging from the center to the free end thereof. The conical bore portions include annular recesses at the end portion thereof, the annular recess facing the equipment terminal cooperating with an annular surface of a conical insulator body. In case of two cable core terminals, a spacer body having two outer cones is provided mated to the conical bore portions of the T-body, the two outer cones coacting with the conical bore portions. A cylindrical portion is formed between the conical portions of the spacer body which coacts with the associated annular recesses of the T-body. The relatively solid T-shaped insulator body and the solid spacer consume a considerable amount of material. Also the manufacturing of these parts is relatively expensive. Solid and, thus, relatively rigid end closure caps require a complicated handling during assembly and additional measures to obtain the desired sealing, e.g. against the cable.

From the EP-A-0 087 267 it has become known to use T-shaped insulating bodies of the kind mentioned above in connection with insulating intermediate bodies. These intermediate bodies are coned twice and cooperate with corresponding conical surfaces on a transverse arm of the T-shaped bodies. By this, the T-shaped bodies can be formed as modules in order to establish an arbitrary number of cable terminations. The conical surface must be precisely formed in order to avoid an undesired penetration of moisture. The T-shaped insulating bodies are relatively solid and require a relatively high expenditure of material.

Finally, it has become known to provide relatively thin-walled resiliently deformable end closure caps with open-ended end portions and adapted to be shifted on the sealing surface of the insulator body of the equipment terminal or the associated end of an adjacent end closure cap, respectively (prospectus Kabeldon AB, "Termination for AEA Safe-six", March 1985). The terminal lugs of the cable ends are connected by bolts which are screwed into bolts polygonal in cross section. Such a cable termination connector is less expensive to manufacture and needs less material than the other known constructions described above, however, has some other deficiencies. For strength reasons, the end closure caps have a limited flexibility, i.e. the used plastic material has to have a relative high Shore hardness. The more or less rigid end closure caps cause sealing problems, above all in the area of connection lugs and the equipment terminal. For this reason, the equipment terminal normally provided with a conical insulator body needs a separate adapter coacting with an end portion of the end closure cap. It is further necessary that the cooperating ends of the end closure caps are carefully wrapped with a suitable sealing tape in order to achieve the necessary sealing for the cable termination connector. It is also disadvantageous that it requires specific assembling efforts to shift the rigid end closure caps telescopically into each other in order to achieve a sufficient tight fit. For this, occasionally, a heating of the parts is necessary. Due to the mentioned additional sealing steps the establishing of the known cable termination connector is relatively labour-expensive.

The object of the invention is to provide an electrical cable termination connector for electrically connecting one-core cables to an equipment, wherein good sealin properties are obtained with simply structured means according to a modular concept requiring a small assembling expense independent of the number of cable core terminals.

This object is attained by the features of the characterizing portion of patent claim 1.

In the cable termination connector according to the invention, an electrically insulating intermediate body is provided having a forward and a rearward sealing surface to sealingly engage the rearward and forward sealing surfaces of a first and a second end closure cap. The axial length of the end closure caps can be small; the end closure caps can be made of sufficiently soft flexible material.

Normally, the end closure caps are integrally formed with a finger overlapping the cable end which yields a T-shaped body. In the invention the complete T-shaped body is adequately flexible and resiliently deformable so that additional sealing measures increasing the assembling costs are not necessary neither in the zone of the end portions of the cap nor in the end portion of the finger.

The assembling of the end closure caps according to the invention does not require special tools and the application of heat or open flames, respectively. A pre-stress in the sealing are can be achieved by means of the relatively elastomeric material whereby the annular sealing surfaces of the end closure caps can effectively sealingly engage the intermediate body or the forward annular sealing surface, respectively. Since only relatively thin-wall material is necessary for the end closure cap the amount of material to be used for the cable termination connector according to the invention is small.

According to an embodiment of the invention the intermediate body is preferably mounted on the extension bolt, preferably by providing a light tight fit on the extension bolt. Extension bolt and intermediate body, further, can be pre-assembled so that a corresponding assembling step at the assembling location can be rendered unnecessary.

The cable termination connector according to the invention can also be used for the connection of further cable cores.

To this purpose, further extension bolts and end closure caps are to be needed. According to the invention, also a corresponding number of further intermediate bodies are to be provided. Since the components for the cable termination-connector are preferably developed under the kit principle the intermediate bodies, according to a further embodiment of the invention, are equally shaped with each other. Further, it is of certain advantage if the end closure caps and/or the intermediate bodies are identically shaped at the ends thereof; this renders the assembly of these parts in a predetermined orientation unnecessary.

As already repeatedly mentioned the enclosure caps according to the invention are made of relatively simply deformable material or of material of small wall thickness, respectively. In this connection an embodiment of the invention provides that the enclosure caps consist of easily manually stretchable material at least in the areas of their open end portions and their fingers. Therefore, the assembling of the end closure caps does not need any auxiliary means. This is of particular advantage for a further embodiment of the invention wherein the intermediate body which is circularly shaped at least in its end portions includes an annular groove at least at one end thereof which is to be engaged by a radially inwardly facing flange of the end closure cap. If a sufficiently flexible material is used the flange can be manually expanded as large as necessary to snap into the annular groove of the intermediate body. The annular sealing surfaces in the end portions of the end closure caps normally have predetermined dimensions; the sealing surfaces associated with the equipment have to be sized accordingly. Therefore, a further embodiment of the invention provides that the annular sealing surface is defined by an at least partially conical sleeve of resiliently deformable material adapted to be placed on the insulator body. Such a sleeve can be made separately and placed on a correspondingly shaped insulator bushing adjacent the equipment terminal. According to an alternative embodiment of the invention, the sleeve is integrally formed with an end closure cap.

The invention is hereinafter explained in detail along an embodiment of the invention illustratated by drawings, the exemplary explanation in no way restricting the scope of protection.
- Fig. 1: shows a perspective view of a cable termination-connector according to the invention for a single cable core connection.
- Fig. 2: shows a perspective view of a cable termination connector according to the invention for two cable core connections.

Before the details illustrated in the drawings are dealt with it is emphasized that each of the described features per se or in connection with features of the claims are essential to the invention.

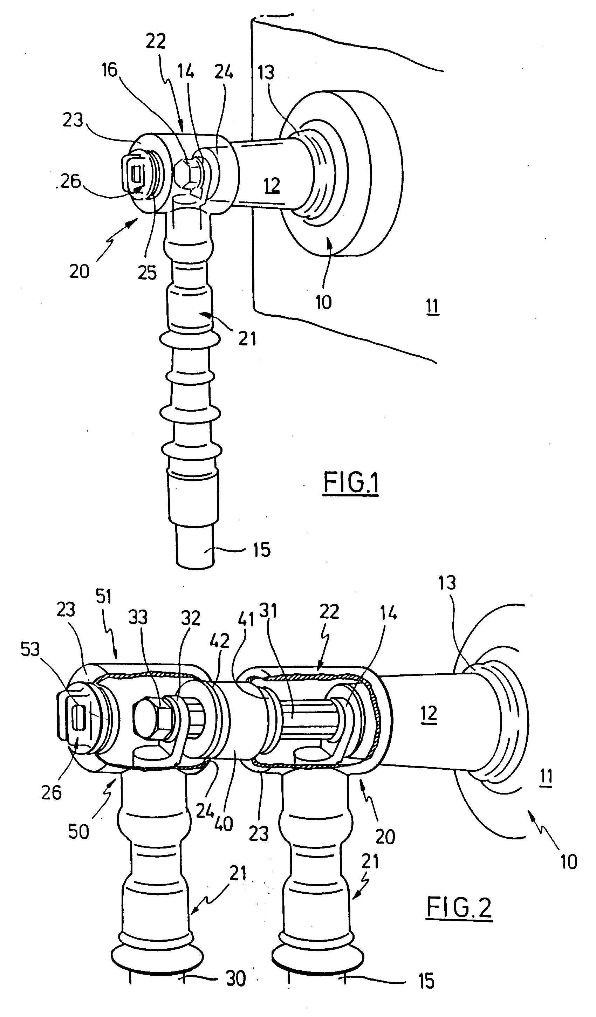

Fig. 1 shows feed-through means 10 through a wall 11, on the other not perceivable side thereof an equipment is located, e.g. switching equipment. An also not perceivable insulator body is led through the feed-through means 10 which in its outer portion is formed as conical equipment bushing, a substantially conical sleeve 12 of resiliently deformable, preferably elastomeric material being shifted onto the conical equipment bushing. At the enlarged end adjacent the equipment, the sleeve 12 includes a gradually conically enlarging flange 13 which sealingly cooperates with an enlarged portion of the equipment bushing as will not be explained in detail. Through the equipment bushing an electrical conductor from the equipment is led through which has an inner threaded bore at the end thereof for the connection of connection lug 14 of the core of a cable 15 by means of a threaded bolt 16.

In Fig. 1 further an end closure cap 20 of a T-shape can be seen. The stem can be sealingly shifted as finger 21 over cable 15. The transverse arm of the T-shaped end closure cap is shaped as cylindrical sleeve which is partially closed at both ends through a radial flange 23, 24. The inner circumference 25 of the radial flanges 23, 24 defines an annular sealing surface which sealingly cooperates with the conical sleeve 12 adjacent the equipment bushing. A simply removable plug 26 is inserted in the other open end of the cylindrical sleeve, the structure of the plug being explained in detail below.

The end closure cap 20 consists of relatively soft, preferably elstomeric plastic material, the finger 21 thus can be relatively simply shifted over the end of cable 15. Further, the sealing surfaces 25 at the radial flanges 23, 24 can be radially deformed to a certain extent so that they can engage the outer surface of the conical sleeve and the corresponding plug surface, respectively under pre-stress in order to achieve a completely sealed cable termination-connection.

End closure cap 20 and conical sleeve 12 preferably consist of the same material. Alternatively, sleeve 12 and end closure cap 20 can be integrally formed.

The parts shown in Fig. 2 are designated with the same reference numbers as the parts shown in Fig. 1 as far as these parts are equal. In Fig. 2 two parallel cables 15, 30 are provided. The connection lug 14 of cable 15 connected to the cable core is fixed to the equipment bushing by means of an extension bolt 31 polygonal in cross section. The conductor fed through the equipment bushing, for example, can be provided with an outer threaded portion at its one end which cooperates with an inner threaded portion of the extension bolt 31. Alternatively, a threaded bolt can be threaded into an inner threaded portion of the equipment bushing, the extension bolt at its other end can be threaded into the inner threaded portion of the extension bolt 31. The extension bolt 31 extends up to the connection lug 32 of the core of the second cable 30, and the connection lug 32 is fixed by means of a threaded bolt 32 against the extension bolt 31, the threaded bolt coacting with an inner thread at the associated end of the extension bolt 31. A solid intermediate body of electrically insulating material is located on the extension bolt 31.

The relatively rigid intermediate body 40 preferably is tightly fitted on the extension bolt 31. Its positioning can be carried out during its manufacturing, it can also be made when establishing the cable termination connector. The cylindrical intermediate body 40 includes circumferential annular grooves 41, 42 at the ends thereof.

End closure cap 20 is associated with cable 15, and end closure cap 50 is associated with cable 30. Both end closure caps 20, 50 are of equal design. They are further of equal design with respect to the end closure cap of the embodiment according to Fig. 1. As can be seen in Fig. 2, the radial flanges 23, 24 of the facing ends of the cylindrical transverse arms 22, 51 engage the annular grooves 41, 42, preferably under radial pre-stress and therefore provide an effective sealing of the inner space of the end closure caps 20, 50 against the intermediate body 40. The sealing of the end closure cap 20 against the conical sleeve 12 is effected in a manner described above. As can be seen further in Fig. 2, the closure plug 26 also includes an annular groove 53 which corresponds in its sizes to that of the grooves 41, 42 of the intermediate body. The associated radial flange of the cylindrical sleeve 51 therefore sealingly engages the annular groove 53.

The end closure caps 20, 50 are of sufficiently resiliently deformable material of relatively small wall thickness so that the cylindrical sleeve portions 22, 51, particularly the radial flanges 23, 24 can be manually deformed and be brought in sealing engagement, occasionally under pre-stress with the annular grooves 41, 42 of the intermediate body 40, with the conical sleeve shifted onto the equipment bushing or with the annular groove 53 of plug 26, respectively. The plug 26, by the way, can be simply removed for earthing or test purposes.

As can be seen in the embodiments illustrated, the parts defining the cable termination connector are conceived according to a modular design. The end closure caps 20, 50 are of the same configuration. In case of a cable termination connector for more than two cables, a corresponding number of end closure caps has to be provided, an intermediate body preferably of the same shape as intermediate body 40 of Fig. 2 being located between each two end closure caps. If, for example, three cables are provided the threaded bolt 33 is displaced by a further extension bolt etc. The soft, however, elastically yieldable material affords a satisfactory sealing in the critical sealing areas, i.e. in the end portions of the cylindrical sleeve portions 22, 25 against the equipment bushing 12, the intermediate body 40 and the plug 26, respectively. For the assembly of the described termination connector no particular tools or the supply of heat are necessary. Thus, the assembly of the cable termination connector can take place within relatively short time. The material costs for the manufacturing of the parts of the cable termination-connector according to the invention are low.

The invention can be applied to all voltages and currents. It is particularly useful in connection with medium voltages of between 10 and 20 kV and current up to 400 kA.

## Claims

1. Electrical cable termination-connector for electrically connecting one-core cables (15, 30) to an equipment terminal which extends out of the equipment through an insulator body (12) and an annular sealing surface provided thereon and is adapted to form a first cable core terminal (14),
the termination-connector comprising
a first resiliently deformable end closure cap (20) having a forward and a rearward open end portion and a finger (21) depending therebetween, the forward end portion being adapted to be sealingly shifted onto the sealing surface of the insulator body (12), the finger (21) being adapted to be sealingly shifted onto the first cable (15),
an extension bolt (31) extending from the first cable core terminal (14) through the rearward open end portion of the first closure end cap (20) and forming at its end a second cable core terminal (32, 33),
and a second resiliently deformable closure end cap (50) having a forward open end portion for establishing a sealing connection with the rear open end portion of the first closure end cap (20), and a depending finger (21) to be sealingly shifted onto the second cable (30),
the rearward open end portion of the first closure end cap (20) and the forward open end portion of the second clsoure end cap (50) being aligned with each other in the shifting-on direction in which the forward open end portion of the first closure end cap (20) can be shifted upon the sealing surface of the insulator body (12),
characterized in that the sealing connection between the closure end caps (20, 50) comprises an essentially rigid, electrically insulating intermediate body (40) circular in cross section which has a forward and a rearward sealing surface adapted to sealingly engage the rearward and forward sealing surfaces (23, 24), respectively, of the first and second closure end caps, respectively, with at least one sealing surface defined by an annular groove (41, 42) adapted to be sealingly engaged by a radially inwardly directed flange (23, 24) of the closure end cap (20, 50).

2. Termination-connector according to claim 1, characterized in that the intermediate body (40) is rigidly connected to the extension bolt (31).

3. Termination-connector according to claim 1 or 2, which is adapted for the connection of further cable cores and to this end comprises further extension bolts and closure end caps, characterized by the provision of a corresponding number of further intermediate bodies (40).

4. Termination-connector according to claim 3, characterized in that the intermediate bodies (40) are essentially identical.

5. Termination-connector according to one of the preceding claims, characterized in that the end closure caps (20, 50) consist of easily manually stretchable material at least in the areas of their open end portions and their fingers.

6. Termination-connector according to one of the claims 1 to 5, characterized in that the rearward end portion of the last end closure cap (50) includes a test opening adapted to be closed by the closure plug (26) or the like.

7. Termination, connector according to one of the claims 1 to 6, characterized in that the annular sealing surface on the insulator body (12) is defined by an at least partially conical sleeve of resiliently deformable material adapted to be shifted onto the insulator body.

8. Termination-connector according to claim 7, characterized in that the sleeve is integrally formed with an end closure cap (20).

9. Termination-connector according to claim 2, characterized in that the intermediate body (40) is tightly fitted on the extension bolt (31).

## Patentansprüche

1. Elektrische Kabelendverschluß-Verbindung zum elektrischen Anschließen einadriger Kabel (15, 30) an einen Geräteanschluß, der durch einen Isolierkörper (12) und eine darauf vorgesehene ringförmige Dichtfläche aus dem Gerät herausgeführt ist und zur Bildung eines ersten Kabelader-Anschlusses (14) ausgebildet ist,
mit einer ersten elastischen verformbaren Endverschlußkappe (20), die einen vorderen offenen Endabschnitt zum abdichtenden Aufschieben auf die Dichtfläche des Isolierkörpers (12), einen hinteren offenen Endabschnitt und einen zwischen den Endabschnitten abgehenden Finger (21) zum abdichtenden Aufschieben auf das erste Kabel (15) aufweist,
einem sich von der ersten Kabelader-Verbindung (14) aus erstreckenden Verlängerungsstift (31), der sich durch den hinteren offenen Endabschnitt der ersten Endverschlußkappe (20) erstreckt und an seinem Ende einen zweiten Kabelader-Anschluß (32, 33) bildet,
und einer zweiten elastisch verformbaren Endverschlußkappe (50), die einen vorderen offenen Endabschnitt zum Herstellen einer Abdichtverbindung mit dem hinteren offenen Endabschnitt der ersten Endverschlußkappe (20) und einen abgehenden Finger (21) zum abdichtenden Aufschieben auf das zweite Kabel (30) aufweist,
wobei der hintere Endabschnitt der ersten Endverschlußkappe (20) und der offene Endabschnitt der zweiten Endverschlußkappe (50) aufeinander in der Aufschieberichtung ausgerichtet sind, in der der vordere Endabschnitt der ersten Endverschlußkappe (20) auf die Dichtfläche des Isolierkörpers (12) aufschiebbar ist,
dadurch gekennzeichnet, daß die Abdichtverbindung zwischen den Endverschlußkappen (20, 50) einen im wesentlichen starren elektrisch isolierenden, im Querschnitt kreisförmigen Zwischenkörper (40) aufweist, der eine vordere und eine hintere Dichtfläche zum abdichtenden Zusammenwirken mit der hinteren bzw. vorderen ringförmigen Dichtfläche (23, 24) der ersten bzw. zweiten Endverschlußkappen aufweist, wobei mindestens eine Dichtfläche von einer Ringnut (41, 42) gebildet ist, in die ein radial nach innen gerichteter Flansch (23, 24) der Endverschlußkappe (20, 50) dichtend eingreift.

2. Kabelendverschluß-Verbindung nach Anspruch 1, dadurch gekennzeichnet, daß der Zwischenkörper (40) fest an dem Verlängerungsstift (31) angebracht ist.

3. Kabelendverschluß-Verbindung nach Anspruch 1 oder 2, die für den Anschluß weiterer Kabeladern eingerichtet ist und zu diesem Zweck weitere Verlängerungsstifte und Endverschlußkappen aufweist, dadurch gekennzeichnet, daß eine entsprechende Anzahl von weiteren Zwischenkörpern (40) vorgesehen ist.

4. Kabelendverschluß-Verbindung nach Anspruch 3, dadurch gekennzeichnet, daß die Zwischenkörper (40) untereinander im wesentlichen gleich sind.

5. Kabelendverschluß-Verbindung nach einem der vorhergehenden Ansprüche, dadurch gekennzeichnet, daß die Endverschlußkappen (20, 50) zumindest in den Bereichen ihrer offenen Endabschnitte und ihrer Finger aus leicht von Hand dehnbarem Material bestehen.

6. Kabelendverschluß-Verbindung nach einem der Ansprüche 1 bis 5, dadurch gekennzeichnet, daß die letzte Endverschlußkappe (50) eine Testöffnung aufweist, die durch einen Verschlußstopfen (26) verschließbar ist.

7. Kabelendverschluß-Verbindung nach einem der Ansprüche 1 bis 6, dadurch gekennzeichnet, daß die ringförmige Dichtfläche von einer auf den Isolierkörper (12) aufschiebbaren, zumindest teilweise konischen Hülse aus elastisch verformbarem Material gebildet ist.

8. Kabelendverschluß-Verbindung nach Anspruch 7, dadurch gekennzeichnet, daß die Hülse einteilig mit einer Endverschlußkappe (20) geformt ist.

9. Kabelendverschluß-Verbindung nach Anspruch 2, dadurch gekennzeichnet, daß der Zwischenkörper (40) im Preßsitz auf dem Verlängerungsstift (31) sitzt.

## Revendications

1. Connecteur d'extrémité de câble électrique pour connexion électrique de câbles à une âme (15, 30) à une borne d'une installation qui s'étend à l'extérieur de l'installation à travers un corps isolant (12) et une surface d'étanchéité annulaire prévue sur celui-ci et qui est adapté pour constituer une première borne d'âme de câble (14),
le connecteur d'extrémité comportant
un premier couvercle de fermeture d'extrémité (20) déformable élastique possédant des parties d'extrémité ouverte avant et arrière et un doigt (21) dépendant entre celles-ci, la partie d'extrémité avant étant adaptée pour être glissée de façon étanche sur la surface d'étanchéité du corps isolant (12), le doigt (21) étant adapté pour être glissé de façon étanche que le premier câble (15),
un boulon d'extension (31) s'étendant depuis la première borne d'âme de câble (14) à travers la partie d'extrémité ouverte arrière du premier couvercle de fermeture d'extrémité (20) et formant à ses extrémités une seconde borne d'âme de câble (32, 33),
et un second couvercle de fermeture d'extrémité (50) déformable élastique possédant une partie d'extrémité ouverte avant destinée à établir une connexion étanche avec la partie d'extrémité ouverte arrière du premier couvercle de fermeture d'extrémité (20), et un doigt dépendant (21) destiné à être glissé de façon étanche sur le second câble (30),
la partie d'extrémité ouverte arrière du premier couvercle de fermeture d'extrémité (20) et la partie d'extrémité ouverte avant du second couvercle de fermeture d'extrémité (50) étant alignées entre elles dans la direction du glissement dans laquelle la partie d'extrémité ouverte avant du premier couvercle de fermeture d'extrémité (20) peut être glissée sur la surface d'étanchéité du corps isolant (12),
caractérisé en ce que la connexion d'étanchéité entre les couvercles de fermeture d'extrémité (20, 50) comporte un corps intermédiaire isolant électrique (40) essentiellement rigide, de section transversale circulaire, possédant des surfaces d'extrémité avant et arrière adaptées pour s'engager respectivement de façon étanche avec les surfaces d'étanchéité arrière et avant (23, 24), du premier et du second couvercles de fermeture d'extrémité, avec au moins une surface d'étanchéité définie par une gorge annulaire (41, 42) adaptée pour s'engager de façon étanche avec une bride (23, 24) du couvercle de fermeture d'extrémité (20, 50), dirigée radialement vers l'intérieur.

2. Connecteur d'extrémité selon la revendication 1, caractérisé en ce que le corps intermédiaire (40) est connecté de façon rigide au boulon d'extension (31).

3. Connecteur d'extrémité selon la revendication 1 ou 2, qui est adapté à la connexion d'autres âmes de câbles et à cet effet, comporte d'autres boulons d'extension et couvercles de fermeture d'extrémité, caractérisé par la fourniture d'un nombre correspondant d'autres corps intermédiaires (40).

4. Connecteur d'extrémité selon la revendication 3, caractérisé en ce que les corps intermédiaires (40) sont essentiellement cylindriques.

5. Connecteur d'extrémité selon l'une des revendications précédentes, caractérisé en ce que les couvercles de fermeture d'extrémité (20, 50) sont constitués de matériau facilement étirable à la main, au moins dans les zones de leurs parties d'extrémité ouvertes et de leurs doigts.

6. Connecteur d'extrémité selon l'une des revendications 1 à 5, caractérisé en ce que la partie d'extrémité arrière du dernier couvercle de fermeture d'extrémité (50) comporte une ouverture de contrôle adaptée pour être fermée par la prise de fermeture (26) ou analogue.

7. Connecteur d'extrémité selon l'une des revendications 1 à 6, caractérisé en ce que la surface d'étanchéité annulaire située sur le corps isolant (12) est définie par un manchon au moins partiellement conique de matériau déformable élastique adapté au glissement sur le corps isolant.

8. Connecteur d'extrémité selon la revendication 7, caractérisé en ce que le manchon est intégralement formé avec un couvercle de fermeture d'extrémité (20).

9. Connecteur d'extrémité selon la revendication 2, caractérisé en ce que le corps intermédiaire (40) est solidement fixé sur le boulon d'extension (31).
